# EUROPÄISCHE PATENTANMELDUNG

(11) **EP 3 002 534 A1**
(43) Veröffentlichungstag der Anmeldung: **06.04.2016**
(21) Anmeldenummer: 15187982.2
(22) Anmeldetag: 01.10.2015
(51) Int. Cl.: F27D 11/10, C21C 5/52, C22B 9/20, F27D 19/00, F27D 21/00, F27D 99/00

(54) **UMSCHMELZOFEN MIT EINER WÄGEZELLE**

(30) Priorität: 02.10.2014 DE 102014014407
(71) Anmelder: ALD Vacuum Technologies GmbH, 63450 Hanau (DE)
(72) Erfinder: Popov, Ivaylov, 63452 Hanau (DE); Oehler, Ralf, 64289 Darmstadt (DE); Nilius, Walter, 66292 Riegelsberg (DE)
(74) Vertreter: Hebing, Norbert

(57) **Zusammenfassung**

Bei einem Umschmelzofen muss das Gewicht einer Abschmelzelektrode laufend gemessen werden, um diese entsprechend ihres Abschmelzens nachstellen zu können.

Dazu befindet sich auf einer Wägezelle (2) eine Plattform (3), auf der sowohl ein Elektrodenstangenantrieb (5) mit der Elektrodenstange (7) sowie ein Haltering (18) zum Halten des Hochstromkabels (13) angeordnet sind.

Obwohl beim Absenken der die Abschmelzelektrode tragende Elektrodenstange (7) die Lage des Hochstromkabels (13) sich ändert, bleibt der gemessene Gewichtsanteil des Hochstromkabels (13) gleich, so dass mit der Wägezelle (2) letztendlich die Änderung des Gewichts der Abschmelzelektrode bestimmt werden kann.

## Beschreibung

Die Erfindung bezieht sich auf einen Umschmelzofen mit wenigstens einer Wägezelle, einer in einem Anlagegestell angeordneten Kokille, einer im Wesentlich senkrecht stehenden und über der Kokille angeordneten Elektrodenstange, an deren zur Kokille gerichtetem Ende eine abschmelzbare Abschmelzelektrode befestigbar ist, einem Elektrodenstangenhalter, an der die Elektrodenstange hängend befestigt ist, einen Elektrodenstangenantrieb zur vertikalen Verschiebung des Elektrodenstangenhalters, um die Abschmelzelektrode entsprechend ihrem Verbrauch in die Kokille nachführen zu können, einem wassergekühlten Hochstromkabel, das einerseits mit der Elektrodenstange und anderseits mit einer Stromschiene elektrisch verbunden ist und das von einem Halter getragen wird, wobei das Hochstromkabel zwischen dem Halter und der Elektrodenstange in einem Bogen verläuft.

Ein derartiger Umschmelzofen ist in der EP 0 212 491 A2 beschrieben.

Umschmelzöfen werden zur Herstellung von Stählen mit hoher Reinheit benutzt. Es kommen dabei verschiedene Verfahren zum Einsatz, die jeweils einen entsprechend konstruierten Umschmelzofen benötigen. Bei so genannten Vakuumlichtbogenöfen erfolgt das Abschmelzen der Abschmelzelektrode unter Vakuum, die Kokille befindet sich dazu in einem vakuumdicht geschlossenen Kessel. Die Abschmelzelektrode taucht in die Kokille ein. Durch Anlegung einer elektrischen Spannung zwischen der Abschmelzelektrode und der Kokille tritt ein Lichtbogen mit einer hohen Stromstärke zwischen dem unteren Ende der Abschmelzelektrode und der sich in der Kokille bildenden Schmelze auf, der die Abschmelzelektrode nach und nach abschmelzen lässt.

Beim Elektroschlacke-Umschmelzverfahren wird die Abschmelzelektrode z. B. aus Stahl in das Schlackenbad einer offenen Kokille eingetaucht, welches gleichzeitig als elektrischer Widerstand fungiert. Auch hier schmilzt die Abschmelzelektrode ab. Beim Durchgang der Schmelze durch die Schlacke werden Schwefel und nichtmetallische Einschlüsse von der Schlacke aufgenommen und später abgeschieden. Der Vorgang erfolgt unter Atmosphärendruck und nicht in einem Vakuum. Der Stahl erstarrt unter der Schlacke in einer Kupferkokille.

In beiden Fällen muss das Gewicht der Abschmelzelektrode kontinuierlich während der Schmelze erfasst werden, um die so genannte Schmelzrate zu ermitteln. In Kenntnis dieser Schmelzrate wird das Absenken der Abschmelzelektrode geregelt, so dass beim Vakuumlichtbogenofen stets ein Abstand zwischen der Schmelz- und der Abschmelzelektrode vorhanden ist, die die Ausbildung eines Lichtbogens gestattet, während beim Elektroschlackeumschmelzverfahren dafür gesorgt wird, dass die Abschmelzelektrode stets in der Schlacke eingetaucht verbleibt.

In der oben erwähnten EP 0 212 491 A2 sind ein oder mehrere Wägezellen zwischen dem Elektrodenstangenhalter und der Elektrodenstange angeordnet, so dass unmittelbar das Gewicht der Elektrodenstange und dem jeweiligen Restgewicht der Abschmelzelektrode gemessen werden kann.

Das wassergekühlte Hochstromkabel schließt allerdings unmittelbar an die Elektrodenstange an, so dass ihr Gewicht mit erfasst wird. Beim Absenken der Elektrodenstange ändert sich aber das anteilige Gewicht des Hochstromkabels, so dass die Abschmelzrate nicht eindeutig bestimmt werden kann.

Es wurde auch schon vorgeschlagen, ein Gestell vorzusehen, innerhalb dessen sich die Elektrodenstange befindet und das über mehrere Wägezellen, die gleichmäßig auf den Umfang des Gestells verteilt sind, gegenüber dem Ofengestell oder dem Deckel des Kessels eines Vakuumlichtbogenofens gelagert ist.

Um eine hohe Messgenauigkeit zu erzielen, ist somit ein großer baulicher Aufwand notwendig, außerdem wird eine bestimmte Bauhöhe benötigt.

Die Erfindung beruht auf der Aufgabe, eine kompakte Anordnung zu schaffen, mit der das jeweils aktuelle Gewicht der Abschmelzelektrode bestimmt werden kann.

Zur Lösung der Aufgabe sieht die Erfindung vor, dass das Hochstromkabel fest mit dem Halter verbunden ist, dass die wenigstens eine Wägezelle auf dem Anlagegestell montiert ist und eine Plattform trägt, wobei auf der Plattform der Elektrodenstangenantrieb und der Halter für das Hochstromkabel angeordnet sind.

Die Plattform trägt somit alle wesentlichen Teile und insbesondere auch das Hochstromkabel, so dass die Gewichtsänderung der Gesamtheit aller Teile, die sich über die Plattform auf der Wägezelle abstützen, allein durch die Änderung des Gewichts der Abschmelzelektrode bestimmt wird.

Da das Hochstromkabel einen Bogen vom Halter bis zum Anschluss an die Elektrodenstange durchläuft, wird von der Wägezelle jeweils das Gewicht des gesamten Bogens erfasst und zwar unabhängig davon, wie weit dieser mit der Elektrodenstange abgesenkt worden ist.

Um eine möglichst gleichmäßige Gewichtsverteilung auf der Wägezelle zu erreichen, ist vorgesehen, dass der Elektrodenstangenantrieb ein vertikal ausgerichteter Linearantrieb ist, dass die Elektrodenstange parallel dazu verläuft und dass die Elektrodenstange und der Halter auf sich gegenüberliegenden Seiten des Linearantriebs angeordnet sind.

Insbesondere bei Vakuumlichtbogenöfen, bei denen die Kokille sich in einem Vakuumofenkessel befindet, wird die Elektrodenstange durch eine Durchführung im Ofenkesseldeckel geführt, die sich oberhalb der Kokille befindet und die Durchführung wird von der Plattform getragen.

Um das Vakuum zu halten, ist die Durchführung passgenau um die Elektrodenstange gelegt, so dass hier zwangsläufig Reibungskräfte auftreten. Um zu verhindern, dass diese Auswirkungen auf die Messung haben, ist vorgesehen, dass die Durchführung von der Plattform getragen wird.

Die Durchführung selbst befindet sich oberhalb einer Öffnung in einem Ofenkessel, der die Kokille aufnimmt. Zwischen der Durchführung und dem Ofenkesseldeckel befindet sich ein Faltenbalg. Der Faltenbalg führt zwar zu einer Gewichtsentlastung für die Durchführung, da seine Vorspannung auch beim Absenken der Elektrodenstange konstant bleibt, kann sein Einfluss vernachlässigt werden.

Vorzugsweise ist vorgesehen, dass der Halter für das Hochstromkabel von einem an der Plattform befestigten Haltering gebildet ist, der das Hochstromkabel fest umschließt. Damit wird erreicht, dass nur der Gewichtsanteil des Abschnittes des Hochstromkabels, der in einem Bogen zur Elektrodenstange verläuft, von der Wägezelle erfasst wird, der Bereich oberhalb des Halteringes vom Anschluss des Hochstromkabels zur Stromschiene aber von der Stromschiene getragen wird und damit nicht bei der Gewichtsmessung berücksichtigt wird.

Evtl. Störeinflüsse bei der Messung sind besonders klein, wenn der Haltering sich möglichst genau unterhalb des Anschlusses des Hochstromkabels an der Stromschiene befindet.

Vorzugsweise werden der Elektrodenstangenantrieb und die Durchführung mittels eines einstellbaren Kippgelenks auf der Plattform gehalten.

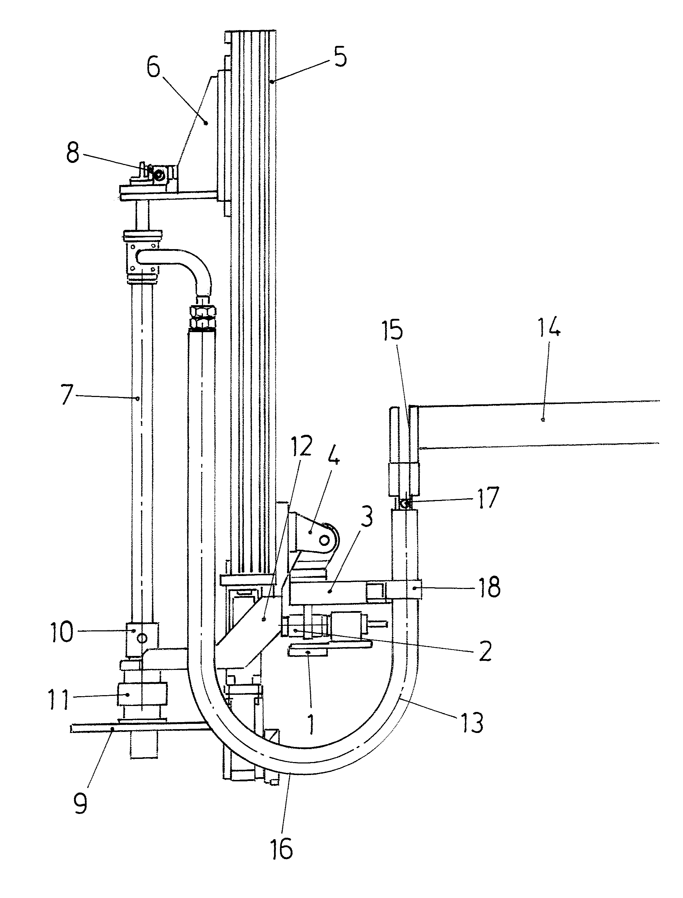

Im Folgenden soll anhand eines Ausführungsbeispieles die Erfindung näher erläutert werden. Dazu zeigt die einzige Figur eine schematische Darstellung der Erfindung.

Auf dem Anlagegestell 1, das hier nur angedeutet ist, befindet sich nur eine einzige Wägezelle 2, auf der eine Plattform 3 angeordnet ist.

Auf der Plattform 3 befindet sich ein Kippgelenk 4, an dem ein Elektrodenstangenantrieb 5 in Form eines vertikal ausgerichteten Linearantriebs befestigt ist. Das Kippgelenk 4 ermöglicht es, den Elektrodenstangenantrieb 5 exakt vertikal auszurichten. Am oberen Ende des Elektrodenstangenantriebs 5 befindet sich ein Elektrodenstangenhalter 6, der vom Linearantrieb vertikal verfahrbar ist und an dem hängend eine Elektrodenstange 7 befestigt ist. Am Elektrodenstangenhalter 6 befindet sich eine Einstelleinrichtung 8, um die Elektrodenstange 7 vertikal auszurichten.

Im Ofenkessel 9, der hier auch nur im oberen Teil dargestellt ist, befindet sich eine Öffnung, durch die die Elektrodenstange 7 hindurchgeführt ist, wobei sich oberhalb des Ofenkessels eine Durchführung 10 in Form einer Manschette befindet, durch die die Elektrodenstange möglichst spielfrei hindurchgeführt ist.

Die Durchführung 10 liegt auf einem am Ofenkessel 9 befestigten Faltenbalg 11 auf und ist mit diesem verbunden.

Die Durchführung 10 ist über einen Bügel 12 mit der Plattform 3 verbunden und wird somit in die Gewichtsmessung einbezogen.

Am unteren Ende der Elektrodenstange 7 wird hier eine nicht näher dargestellte Abschmelzelektrode befestigt. Die Zuleitung eines elektrischen Stromes zur Abschmelzelektrode erfolgt über ein Wasser gekühltes Hochstromkabel 13, dessen eines Ende am oberen Ende der Elektrodenstange 7 und dessen anderes Ende an einer Stromschiene 14 angeschlossen ist. Das Hochstromkabel 13 besteht aus einer Litze 15, die von einer Hülle 16 umgeben ist, in der zur Kühlung der stromführenden Litze 15 über einen Wasseranschluss 17 Wasser eingeleitet wird.

Die Befestigung des Hochstromkabels 13 an der Plattform 3 erfolgt mittels eines Halteringes 18, der das Hochstromkabel 13 unterhalb seines Anschlusses an die Stromschiene 14 umfasst und so fest hält, dass sich das Stromkabel 13 nicht gegenüber des Halteringes 18 bewegen kann. Von dieser Befestigung an der Plattform 3 ausgehend ist das Hochstromkabel 13 in einem Bogen zum Anschluss an die Elektrodenstange 7 geführt. Der Wasseranschluss 17 befindet sich an dem Haltering 18 und dem Anschluss des Hochstromkabels 13 an die Stromschiene 14.

Um eine zentrale Belastung der Wägezelle 2 zu erreichen, befinden sich die Elektrodenstange 7 und der Haltering 18 für das Hochstromkabel 13 auf der gegenüberliegenden Seite des Elektrodenstangenantriebes 5.

Die einzige Figur zeigt die Stelleinrichtung für die Abschmelzelektrode in einem Zustand, bei der sich diese an ihrem höchsten Punkt befindet. Da die Abschmelzelektrode nach und nach abgeschmolzen wird, muss sie in die Kokille geregelt abgesenkt werden. Dies erfolgt mit Hilfe des Elektrodenstangenantriebs 5, wobei die Regelung des Absenkweges gewichtsgesteuert erfolgt. Die Wägezelle 2 misst daher das Gewicht des Elektrodenstangenantriebs 5, der Elektrodenstange 7, der Durchführung 10 sowie des Abschnittes des Hochstromkabels 13 vom Anschluss an die Elektrodenstange 7 bis zum Haltering 18. Das Gewicht der Stromschiene 14 und des Wasseranschlusses 17 werden nicht erfasst, da sie oberhalb des Halteringes 18 liegen. Der gemessene Gewichtsanteil des Hochstromkabels 13 ist konstant, da er unabhängig davon ist, wie weit der Bogen, den das Stromkabel 13 durchläuft, zusammen mit der Elektrodenstange 7 nach unten abgesenkt wird.

Da die genannten Komponenten bis auf die Abschmelzelektrode stets dasselbe Gewicht haben, kann mit der Wägezelle 2 das Gewicht dieser Abschmelzelektrode bestimmt werden und dementsprechend der Elektrodenstangenantrieb 5 angesteuert werden.

### Bezugszeichenliste

- 1: Anlagegestell
- 2: Wägezelle
- 3: Plattform
- 4: Kippgelenk
- 5: Elektrodenstangenantrieb

- 6: Elektrodenstangenhalter
- 7: Elektrodenstange
- 8: Einstelleinrichtung
- 9: Ofenkessel
- 10: Durchführung

- 11: Faltenbalg
- 12: Bügel
- 13: Hochstromkabel
- 14: Stromschiene
- 15: Litze

- 16: Hülle
- 17: Wasseranschluss
- 18: Haltering

## Patentansprüche

1. Umschmelzofen mit wenigstens einer Wägezelle (2), einer in einem Anlagegestell angeordneten Kokille, einer im Wesentlich senkrecht stehenden und über der Kokille angeordneten Elektrodenstange (7), an deren zur Kokille gerichtetem Ende eine abschmelzbare Abschmelzelektrode befestigbar ist, einem Elektrodenstangenhalter (6), an der die Elektrodenstange (7) hängend befestigt ist, einen Elektrodenstangeantrieb (5) zur vertikalen Verschiebung des Elektrodenstangenhalters (6), um die Abschmelzelektrode entsprechend ihrem Verbrauch in die Kokille nachführen zu können, einem wassergekühlten Hochstromkabel (13), das einerseits mit der Elektrodenstange (7) und anderseits mit einer Stromschiene (14) elektrisch verbunden ist und das von einem Halter (18) getragen wird, wobei das Hochstromkabel (13) zwischen dem Halter (18) und der Elektrodenstange (7) in einem Bogen verläuft, **dadurch gekennzeichnet, dass** das Hochstromkabel (13) fest mit dem Halter (18) verbunden ist, dass die Wägezelle (2) auf dem Anlagegestell (1) montiert ist und eine Plattform (3) trägt, wobei auf der Plattform (3) der Elektrodenstangeantrieb (5) und der Halter (18) für das Hochstromkabel (13) angeordnet sind.

2. Umschmelzofen nach Anspruch 1, **dadurch gekennzeichnet, dass** der Elektrodenstangeantrieb (5) ein vertikal ausgerichteter Linearantrieb ist, dass die Elektrodenstange (7) parallel dazu verläuft und dass die Elektrodenstange (7) und der Halter (18) auf sich gegenüberliegenden Seiten des Linearantriebs angeordnet sind.

3. Umschmelzofen nach Anspruch 1 oder 2, **dadurch gekennzeichnet, dass** die Elektrodenstange (7) durch eine Durchführung (10) geführt ist, die sich oberhalb der Kokille befindet, und dass die Durchführung (10) von der Plattform (3) getragen wird.

4. Umschmelzofen nach Anspruch 3, **dadurch gekennzeichnet, dass** die Kokille in einem Ofenkessel (9) angeordnet ist und die Durchführung (10) sich über eine Öffnung im Ofenkessel (9) befindet und sich zwischen dem Ofenkessel (9) und der Durchführung ein Faltenbalg (11) befindet.

5. Umschmelzofen nach einem der vorhergehenden Ansprüche, **dadurch gekennzeichnet, dass** der Halter für das Hochstromkabel (13) von einem an der Plattform befestigen Haltering (18) gebildet ist, der das Hochstromkabel (13) fest umschließt.

6. Umschmelzofen nach Anspruch 5, **dadurch gekennzeichnet, dass** der Haltering (18) sich unterhalb des Anschlusses des Hochstromkabels (13) an der Stromschiene (14) befindet.

7. Umschmelzofen nach einem der vorhergehenden Ansprüche, **dadurch gekennzeichnet, dass** der Elektrodenstangenantrieb (5) und die Durchführung (10) mittels eines einstellbaren Kippgelenks (4) auf der Plattform (3) gehalten sind.
